# EUROPÄISCHE PATENTANMELDUNG

(11) **EP 1 152 143 A2**
(43) Veröffentlichungstag der Anmeldung: **07.11.2001**
(21) Anmeldenummer: 01108248.4
(22) Anmeldetag: 31.03.2001
(51) Int. Cl.: F02M 37/08, H02K 11/02

(54) **Einrichtung zum Anschluss eines Elektromotors**

(30) Priorität: 05.05.2000 DE 10021949
(71) Anmelder: Mannesmann VDO AG, 60388 Frankfurt am Main (DE)
(72) Erfinder: Allendorf, Uwe, 36282 Hauneck (DE); Zöll, Jürgen, 36266 Heringen (DE)
(74) Vertreter: Rassler, Andrea, Dipl.-Phys.

(57) **Zusammenfassung**

Ein Entstörteil (17) für eine Einrichtung (8) zum Anschluss eines Elektromotors hat einen Varistor und einen dazu parallel geschalteten Kondensator zu seiner Entstörung. Das Entstörteil weist im Vergleich zu einem Kondensator besonders kleine Abmessungen auf. Die Abmessungen des Entstörteils (17) sind bei zur Entstörung von insbesondere für Kraftstoffpumpen eingesetzten Elektromotoren im wesentlichen unabhängig von seiner Leistung. Hierdurch erfordert die Montage von Entstörteilen (17) an dem Elektromotor unterschiedlicher Leistung einen besonders geringen baulichen Aufwand.

## Beschreibung

Die Erfindung betrifft eine Einrichtung zum Anschluss eines Elektromotors, insbesondere eines zum Antrieb einer Kraftstoffpumpe vorgesehenen Elektromotors, mit zwei elektrischen, zu dem Elektromotor führenden Leitern und mit einem zwischen den Leitern angeordneten Entstörteil.

Eine solche Einrichtung hat meist einen Kondensator als Entstörteil und wird bei in heutigen Kraftfahrzeugen eingesetzten Elektromotoren häufig eingesetzt. Dieser Kondensator unterdrückt in Abhängigkeit von seiner Kapazität bis zu einem vorgesehenen Grad die Bildung von elektromagnetischen Störfeldern des Elektromotors. Heutige Kraftfahrzeuge erfordern wegen besonders empfindlicher Bauteile, wie beispielsweise einem Navigationsgerät, eine besonders zuverlässige Entstörung des Elektromotors.

Man könnte daran denken, einen entsprechend großen Kondensator einzusetzen. Dies führt jedoch insbesondere bei dem zum Antrieb der Kraftstoffpumpe vorgesehenen Elektromotor zu Platzproblemen und weiterhin zu einer aufwendigen Aufnahme des Entstörteils. Weiterhin erfordert das Entstörteil wegen der kapazitätsabhängigen Größe des Kondensators in Abhängigkeit von der vorgesehenen Entstörung bemessene Aufnahmen an dem Elektromotor.

Der Erfindung liegt das Problem zugrunde, eine Einrichtung zum Anschluss eines Elektromotors der eingangs genannten Art so zu gestalten, dass das Entstörteil mit besonders geringem baulichen Aufwand an dem Elektromotor angeordnet werden kann.

Dieses Problem wird erfindungsgemäß dadurch gelöst, dass das Entstörteil ein Bauelement ist, das einen Kondensator und einen dazu parallel geschalteten Varistor aufweist.

Durch diese Gestaltung ermöglicht die erfindungsgemäße Einrichtung den Einsatz von auf die vorgesehene Entstörung angepassten Entstörteilen. Da derartige Bauelemente um ungefähr zwei Drittel kleiner sind als vergleichbare Kondensatoren mit großer Kapazität, lässt sich das Entstörteil bei einer zuverlässigen Unterdrückung der elektromagnetischen Störfelder mit besonders kleinen Abmessungen gestalten. Beispielsweise hat ein einem Kondensator mit der Kapazität 4,7 *µ*F entsprechendes Entstörteil die Größe eines Kondensators mit 1,5 *µ*F. Mit dem einem Kondensator der Kapazität von 4,7 *µ*F entsprechendes Entstörteil lässt sich ein für den Einsatz in einem beispielsweise mit einem Navigationssystem ausgestatteten Kraftfahrzeug vorgesehener Elektromotor ausreichend entstören. Durch die geringen Abmessungen erfordert das Entstörteil mit dem Varistor zu seiner Befestigung an dem Elektromotor nur einen besonders geringen baulichen Aufwand. Ein weiterer Vorteil des erfindungsgemäßen Entstörteils besteht darin, dass zur Entstörung von Elektromotoren mit geringer Leistung vorgesehene Entstörteile unterschiedlicher Leistung annähernd dieselbe Größe aufweisen. Hiercher Leistung annähernd dieselbe Größe aufweisen. Hierdurch lässt sich ohne Veränderung der Aufnahme für den Varistor an dem Elektromotor die Entstörstärke variieren.

Zur Vereinfachung der Befestigung des Entstörteiles an dem Elektromotor trägt es gemäß einer vorteilhaften Weiterbildung der Erfindung bei, wenn der Varistor als Scheibenvaristor ausgebildet ist.

Zur Vereinfachung der Montage der erfindungsgemäßen Einrichtung an dem Elektromotor trägt es bei, wenn das Entstörteil eine Ummantelung aus kraftstoffbeständigem Kunststoff aufweist. Bei dem kraftstoffbeständigen Kunststoff kann es sich beispielsweise um Epoxidharz, POM oder PPS handeln. Hierbei lassen sich zudem Aufnahmen für Befestigungsmittel einfach in dem Kunststoff vorsehen.

Zur weiteren Vereinfachung der Montage der erfindungsgemäßen Einrichtung trägt es bei, wenn die Ummantelung stoffschlüssig mit dem Entstörteil allein oder zusammen mit Drosseln und daran angrenzenden Bereichen des Elektromotors verbunden ist. Die stoffschlüssige Verbindung kann beispielsweise durch ein Vergießen oder ein Umspritzen erzeugt werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch einen Elektromotor in einem Längsschnitt mit einer erfindungsgemäßen Einrichtung,
- Fig.2: die erfindungsgemäße Einrichtung aus Figur 1,
- Fig.3: die erfindungsgemäße Einrichtung aus Figur 1 nach einer Ummantelung mit Kunststoff.

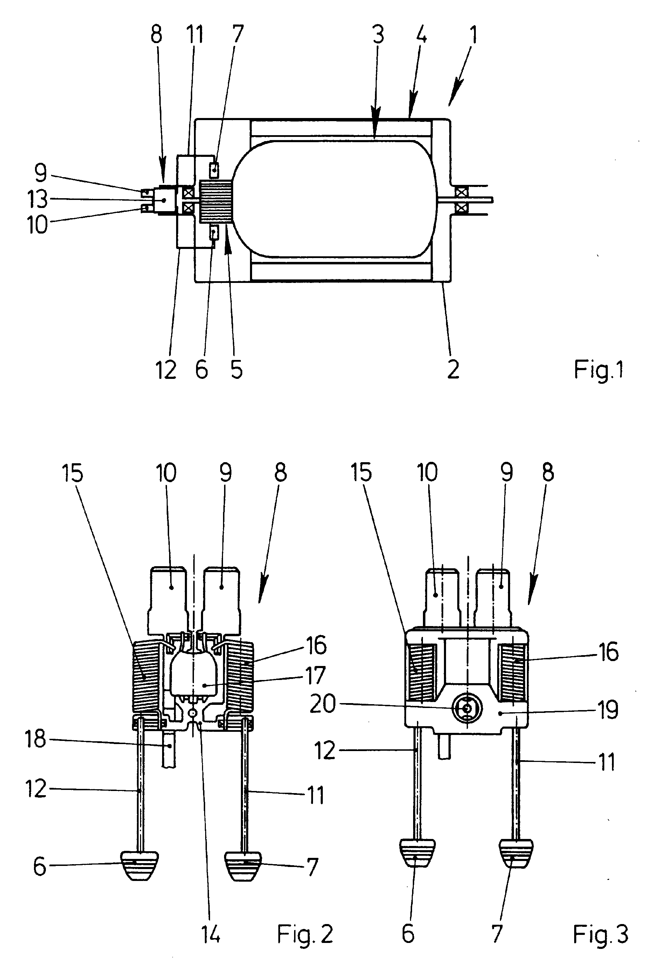

Figur 1 zeigt einen Elektromotor 1 mit einem drehbar in einem Gehäuse 2 gelagerten Rotor 3 und mit einem Stator 4. Der Rotor 3 hat zu seiner Versorgung mit elektrischem Strom einen Läufer 5, über den Kohlebürsten 6, 7 gleiten. Die Versorgung des Läufers 5 mit elektrischem Strom erfolgt über eine Einrichtung 8 mit Anschlusskontakten 9, 10 und mit Anschlussleitungen 11, 12, zwischen denen ein Entstörteil 13 angeordnet ist. Die Anschlussleitungen 11, 12 führen zu den Kohlebürsten 6, 7. An den Anschlusskontakten 9, 10 lassen sich nicht dargestellte Steckkontakte eines Stromnetzes anschließen. Dieser Elektromotor 1 ist zum Antrieb einer Kraftstoffpumpe eines Kraftfahrzeuges vorgesehen und wird mit Kraftstoff durchströmt.

Figur 2 zeigt stark vergrößert die Einrichtung aus Figur 1. Die Anschlusskontakte 9, 10, die Anschlussleitungen 11, 12 und das Entstörteil 17 sind auf einem aus einem elektrisch nicht leitenden Material gefertigten Trägerteil 14 befestigt. Zwischen den Anschlusskontakten 9, 10 und den Anschlussleitungen 11, 12 sind jeweils eine Drossel 15, 16 angeordnet. Das Entstörteil 17 hat einen als Scheibenvaristor ausgebildeten Kondensator mit parallel geschaltetem Varistor, der mit beiden Anschlusskontakten 9, 10 verbunden ist. Weiterhin hat die Einrichtung 8 eine Massefeder 18.

Figur 3 zeigt die Einrichtung aus Figur 2 mit einer Ummantelung aus kraftstoffresistentem Kunststoff. Hierbei ist zu erkennen, dass die Ummantelung 19 das Entstörteil 17 aus Figur 2 vollständig umschließt. Die Einrichtung 8 hat eine zentrische Ausnehmung 20 zur Durchführung eines Befestigungsmittels. Hierdurch lässt sich die Einrichtung 8 an dem in Figur 1 dargestellten Elektromotor 1 befestigen. Da das in Figur 2 dargestellte Entstörteil 17 unabhängig von seiner Leistung eine nahezu gleichbleibende Größe aufweist, kann die Einrichtung 8 auf eine vorgesehene Entstörstärke angepasst werden, ohne dass sich die Position der Ausnehmung 20 oder die äußeren Abmessungen der Einrichtung 8 ändern.

## Patentansprüche

1. Einrichtung zum Anschluss eines Elektromotors, insbesondere eines zum Antrieb einer Kraftstoffpumpe vorgesehenen Elektromotors, mit zwei elektrischen, zu dem Elektromotor führenden Leitern und mit einem zwischen den Leitern angeordneten Entstörteil, **dadurch gekennzeichnet, dass** das Entstörteil (17) einen Kondensator mit parallel geschaltetem Varistor aufweist.

2. Einrichtung nach Anspruch 1, **dadurch gekennzeichnet, dass** der Varistor als Scheibenvaristor ausgebildet ist.

3. Einrichtung nach Anspruch 1 oder 2, **dadurch gekennzeichnet, dass** der Varistor eine Ummantelung (19) aus kraftstoffbeständigem Kunststoff aufweist.

4. Einrichtung nach zumindest einem der vorhergehenden Ansprüche, **dadurch gekennzeichnet, dass** die Ummantelung stoffschlüssig mit dem Entstörteil (17) allein oder zusammen mit Drosseln (15, 16) und daran angrenzenden Bereichen des Elektromotors verbunden ist.
